# EUROPEAN PATENT APPLICATION

(11) **EP 2 587 744 A1**
(43) Date of publication of application: **01.05.2013**
(21) Application number: 11186463.3
(22) Date of filing: 25.10.2011
(51) Int. Cl.: H04L 12/58

(54) **Method, system and apparatus for processing communications**

(71) Applicant: Research In Motion Limited, Waterloo, ON N2L 3W8 (CA)
(72) Inventor: Hymel, James, Allen, Waterloo, Ontario N2L 3W8 (CA)
(74) Representative: MERH-IP Matias Erny Reichl Hoffmann

(57) **Abstract**

According to embodiments described in the specification, a method, system and apparatus for processing messages are provided. The method comprises storing a plurality of messages in a memory of the server, each message having one of a plurality of thread identifiers; receiving a closing message via a communications interface, the closing message including a first thread identifier and a thread closing instruction; responsive to receiving the closing message, locating each of the plurality of messages having thread identifiers which match the first thread identifier; and updating a status indicator in association with each of the located messages.

## Description

### FIELD

The specification relates generally to electronic communications, and specifically to a method, system and apparatus for processing communications.

### BACKGROUND

The use of electronic correspondence has become very common in many industries and in personal affairs. The ease with which such correspondence, such as email, can be generated can result in messages being received at elevated rates, resulting in large volumes of messages to be processed. The volume of correspondence needing to processed can lead to inefficient use of resources in processing it.

### GENERAL

According to an aspect of the specification, a server is provided, comprising: a memory; a communications interface; and a processor interconnected with the memory and the communications interface; the processor configured to store a plurality of messages in the memory, each message having one of a plurality of thread identifiers; the processor further configured to receive a closing message via the communications interface, the message including a first thread identifier and a thread closing instruction; the processor further configured, responsive to receiving the closing message, to locate each of the plurality of messages having thread identifiers which match the first thread identifier; and the processor further configured to update a status indicator in association with each of the located messages.

According to another aspect of the specification, a method of processing messages at a server is provided, the method comprising: storing a plurality of messages in a memory of the server, each message having one of a plurality of thread identifiers; receiving a closing message via a communications interface, the closing message including a first thread identifier and a thread closing instruction; responsive to receiving the closing message, locating each of the plurality of messages having thread identifiers which match the first thread identifier; and updating a status indicator in association with each of the located messages.

According to a further aspect of the specification, a non-transitory computer readable medium is provided for storing a plurality of computer-readable instructions executable by a processor for performing the above method.

### BRIEF DESCRIPTIONS OF THE DRAWINGS

Embodiments are described with reference to the following figures, in which:

Figure 1 depicts a system for processing communications, according to a non-limiting embodiment;

Figure 2 depicts a method of processing communications, according to a non-limiting embodiment;

Figure 3 depicts a message database at the electronic communication device of Figure 1, according to a non-limiting embodiment;

Figure 4 depicts an interface generated by the electronic communication device of Figure 1, according to a non-limiting embodiment;

Figure 5 depicts a further interface generated by the electronic communication device of Figure 1, according to a non-limiting embodiment;

Figure 6 depicts an updated version of the message database of Figure 3, according to a non-limiting embodiment;

Figure 7 depicts a method of processing communications, according to another non-limiting embodiment; and

Figure 8 depicts another interface generated by the electronic communication device of Figure 1, according to a non-limiting embodiment.

### DETAILED DESCRIPTION OF THE EMBODIMENTS

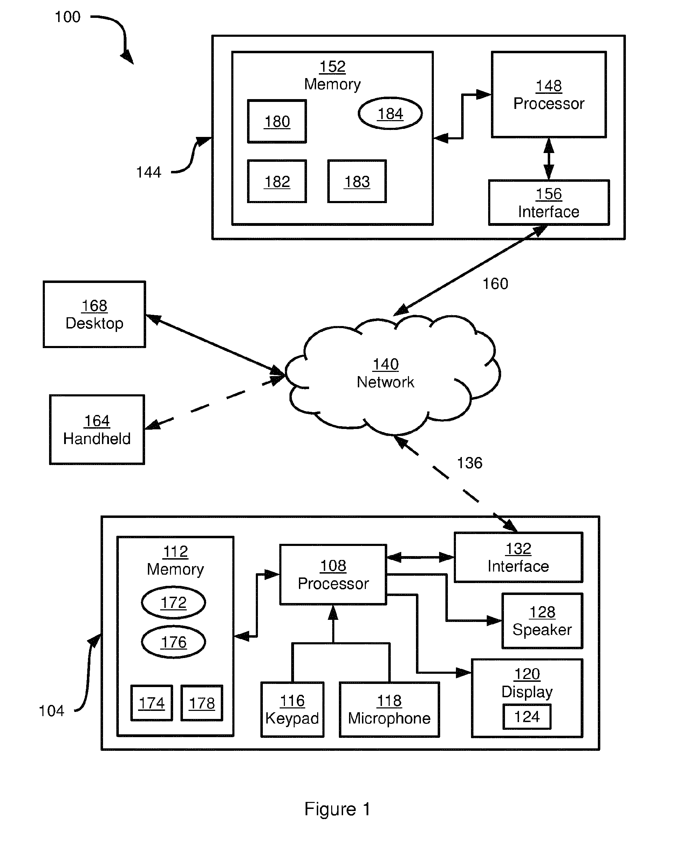

Figure 1 depicts a communications system 100. System 100 includes an electronic communication device 104. In the present example, electronic communication device 104 is based on the computing environment and functionality of a hand-held wireless communication device. Electronic communication device 104 is not limited to a hand-held wireless communication device, however. A wide variety of electronic communication devices are contemplated, including but not limited to cellular telephones, smart telephones, Personal Digital Assistants ("PDAs"), media (e.g. MP3) players, laptop computers, tablet computers, desktop computers and the like.

Electronic communication device 104 includes a processor 108 interconnected with a non-transitory computer readable storage medium such as a memory 112. Memory 112 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. In the present example, memory 112 includes both a volatile memory and a non-volatile memory. Other types of non-transitory computer readable storage media are also contemplated, such as compact discs (CD-ROM, CD-RW) and digital video discs (DVD).

Electronic communication device 104 also includes one or more input devices interconnected with processor 108. Such input devices are configured to receive input and provide data representative of such input to processor 108. Input devices can include, for example, a keypad 116 and a microphone 118. Thus, keypad 116 can receive input in the form of the depression of one or more keys, and can then provide data representative of such input to processor 108. The data provided to processor 108 can be, for example, an American Standard Code for Information Interchange (ASCII) value for each of the depressed keys. Keypad 116 can be a full QWERTY keypad, a reduced QWERTY keypad or any other suitable arrangement of keys. Microphone 118 can also receive input in the form of sound waves, and transmit data representative of such input to processor 108.

In some examples, electronic communication device 104 can include additional input devices in the form of one or more touch screens, buttons, light sensors and the like (not shown). More generally, any suitable combination of the above-mentioned input devices can be incorporated into electronic communication device 104.

Electronic communication device 104 further includes one or more output devices. The output devices of electronic communication device 104 include a display 120. Display 120 includes display circuitry 124 controllable by processor 108 for generating interfaces which include representations of data maintained in memory 112. Display 120 includes a flat panel display comprising any one of, or any suitable combination of, a Liquid Crystal Display (LCD), a plasma display, an Organic Light Emitting Diode (OLED) display, and the like. Circuitry 124 can thus include any suitable combination of display buffers, transistors, LCD cells, plasma cells, phosphors, LEDs and the like. When the input devices of electronic communication device 104 include a touch screen input device, the touch screen (not shown) can be integrated with display 120, though it is contemplated that the touch screen can also be provided separately from display 120.

The output devices of electronic communication device 104 can also include a speaker 128 interconnected with processor 108. Additional output devices are also contemplated, including, for example, a light-emitting indicator (not shown) in the form of an LED, and a motor or other mechanical output device (not shown) for causing electronic communication device 104 to vibrate. In general, electronic communication device 104 can include any suitable combination of the above-mentioned output devices, and may also include other output devices.

Electronic communication device 104 also includes a communications interface 132 interconnected with processor 108. Communications interface 132 allows electronic communication device 104 to communicate with other computing devices via a link 136 and a network 140. Network 140 can include any suitable combination of wired and/or wireless networks, including but not limited to a Wide Area Network (WAN) such as the Internet, a Local Area Network (LAN), cell phone networks, WiFi networks, WiMax networks and the like. Link 136 is compatible with network 140. In particular, link 136 can be a wireless link based on any of the Global System for Mobile communications (GSM), General Packet Radio Service (GPRS), Enhanced Data rates for GSM Evolution (EDGE), third and fourth-generation mobile communication system (3G and 4G), Institute of Electrical and Electronic Engineers (IEEE) 802.11 (WiFi) or other wireless protocols or standards. Link 136 can also include any base stations and backhaul links necessary to connect electronic communication device 104 to network 140.

Communications interface 132 of electronic communication device 104 is selected for compatibility with link 136 as well as with network 140. Communications interface 132 thus includes one or more transmitter/receiver assemblies, or radios, and associated circuitry. For example, communications interface 132 can include a first assembly, or radio, for enabling communications over a WiFi network, and a second radio for enabling communications over one or more mobile telephone networks (e.g. 3G networks).

The various components of electronic communication device 104 are contained within a housing (not shown) comprising any suitable combination of materials (e.g. aluminum, plastics, composites and the like). The components of electronic communication device 104 are interconnected via a communication bus (not shown). Electronic communication device 104 can be powered by a battery (not shown) also contained within the housing, though it is contemplated that electronic communication device 104 can also be supplied with electricity by a wired connection to a wall outlet or other power source in addition to or instead of the battery. In other examples, such as where a desktop computer is provided for electronic communication device 104 rather than a hand-held wireless device, certain components need not be contained within the same housing. For example, display 120 can be housed separately from an enclosure housing processor 108 and memory 112. As a further example, keypad 116 can be replaced or supplemented by a keyboard which is housed separately from the enclosure housing processor 108 and memory 112.

System 100 also includes a server 144, which can be based on any known server environment. Server 144 thus includes one or more processors such as a processor 148. Processor 148 is interconnected with a non-transitory computer-readable storage medium, such as a memory 152. Memory 152 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. Server 144 also includes one or more communications interfaces, such as a communications interface 156, for interconnecting server 144 with network 140 via a link 160. In the present embodiment, link 160 is a wired link, and communications interface 156 is a network interface controller (NIC) which enables communications based on the Ethernet standard. It is contemplated, however, that link 160 can be any suitable combination of wired and wireless links, and that the nature of communications interface 156 can be varied according to the nature of link 160.

Server 144 can be controlled by way of input and output devices (not shown) such as a keyboard, a mouse and a display. Such input and output devices can be co-located with server 144 and connected with processor 148 via local connections (e.g. Universal Serial Bus (USB)). In other embodiments, the input and output devices can be located at a terminal (not shown) remote from server 144 and connected to server 144 via network 140 and link 160. In some embodiments, both local input devices and a remote terminal can be present, and server 144 can be controlled via either the local input devices or the remote terminal, as desired.

System 100 can also include additional electronic communication devices, such as another hand-held wireless communication device 164 and a desktop computer 168, each interconnected with network 140 via respective links. It is contemplated that any number of such additional electronic communication devices may be present. Further, it is contemplated that system 100 can include any number of other servers and the like in addition to server 144.

Electronic communication device 104 can send and receive communications to and from other electronic communication devices, including handheld 164 and desktop 168. Such communications can include messages such as email messages, Short Message Service (SMS) messages, Multimedia Messaging Service (MMS) messages, and the like. To that end, electronic communication device 104 stores a messaging application 172 in memory 112. Messaging application 172 comprises a plurality of computer-readable instructions which are executable by processor 108. Processor 108 is configured, via execution of the instructions of messaging application 172, to carry out various functions related to the processing of messages at electronic communication device 104. Electronic communication device 104 also stores a message database 174 in memory 112. Message database 174 is used by electronic communication device 104 to store messages received from other communication devices (e.g. handheld 164 and desktop 168) and messages sent to such other communication devices.

Electronic communication device 104 can also store and process calendar events, and thus includes a calendar application 176 stored in memory 112. Calendar application 176 comprises a plurality of computer-readable instructions which are executable by processor 108 for causing processor 108 to carry out various functions related to the processing of calendar events. Electronic communication device 104 also stores a calendar database 178 for storing data defining calendar events. Further discussion of applications 172 and 176, as well as databases 174 and 178, will be provided below. It is contemplated that in some examples, applications 172 and 176 can be merged as a single communications application, and that databases 174 and 178 can also be merged into a single database.

Server 144 maintains and processes a communications account associated with electronic communication device 104. Thus, server 144 stores a database 180 in memory 152. Database 180 can contain both messages and calendar events in connection with the communications account. Thus, database 180 is synchronized with databases 174 and 178 in any suitable manner over links 160 and 136, via network 140. It is contemplated that server 144 can also maintain communications accounts associated with other electronic communication devices, such as handheld 164 and desktop 168. Thus, in the present example, server 144 also stores databases 182 and 183 in memory 152. Database 182 can be a repository of messages and calendar events associated with handheld 164, while database 183 can be a repository of messages and calendar events associated with desktop 168. Server 144 also stores a server application 184 in memory 152, comprising a plurality of computer-readable instructions which are executable by processor 148 for performing various functions in connection with the communications accounts maintained by server 144.

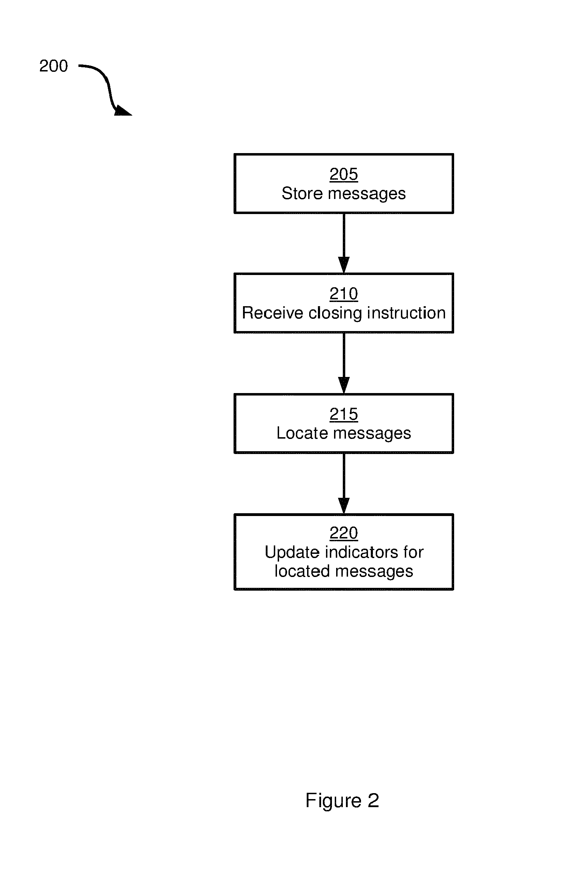

Referring to Figure 2, a method 200 of processing communications will be discussed. The performance of method 200 will be discussed in conjunction with its example performance on system 100, though it will be understood that method 200 can be also be performed on any other suitable system.

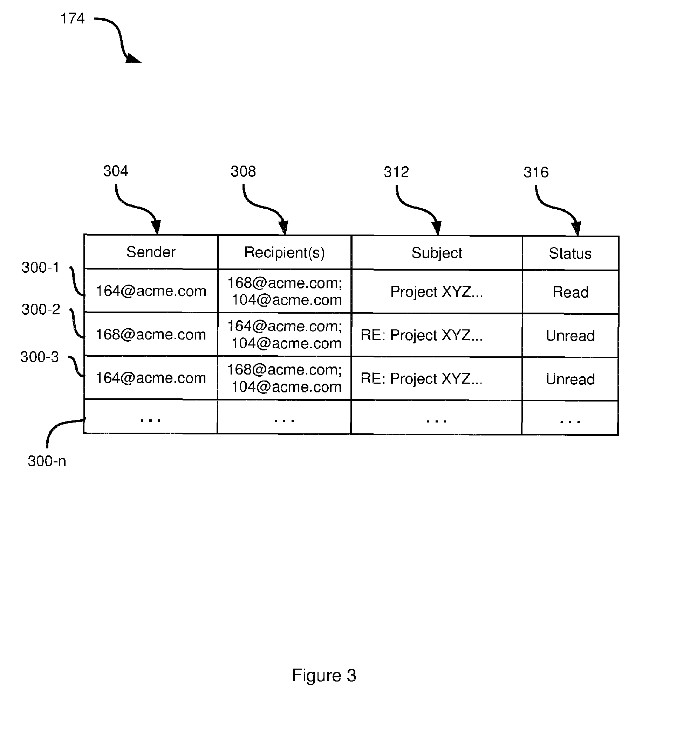

In the following description of an example performance of method 200, it will be assumed that prior to the performance of block 205, a plurality of email messages have been exchanged between electronic communication device 104, handheld 164 and desktop 168, via server 144. As a result of the exchanges of messages, message database 174 of communication device 104 includes the records shown in Figure 3. The header row shown in Figure 3 is provided for illustrative purposes, and need not be present in database 174. Additionally, it is contemplated that the tabular format shown in Figure 3 is also provided by way of example; database 174 can take any suitable format, as will now be understood by those skilled in the art. As database 174 contains the records shown in Figure 3, database 180 contains corresponding records as a result of synchronization with database 174.

Database 174, as shown in Figure 3, includes a plurality of records 300, labelled 300-1, 300-2, 300-3 and so on (referred to collectively as records 300, and generically as a record 300). Each record 300 includes a sender field 304 containing an identifier (in the present example, an email address) of the device or account from which the message originated. Each record 300 also includes a recipients field 308 containing an identifier (in the present example, an email address) of each recipient of the message defined by the record 300. Additionally, each record 300 includes a subject field 312. Subject field 312 contains the subject line of the message, which is generally included in a message header upon transmission. As will be discussed in further detail below, the subject field 312 of a record 300 can be used to identify the "thread" to which the record 300 belongs. In general, records 300 with similar, or substantially similar, subjects are considered to be members in the same thread. Thus, records 300-1, 300-2 and 300-3, which include substantially similar subjects (the contents of subject field 312 for each record is the same aside from the leading "RE:" flags), are members of the same thread, which may be referred to as the "Project XYZ thread".

Each record 300 also includes a status indicator field 316. It is contemplated that numerous other fields can also be included in database 174, such as the message contents (also referred to as the message body), a timestamp indicating when the message was received, and the like. Such additional fields are contemplated, but not shown in Figure 3 for simplicity. Database 180 at server 144 can contain at least the fields discussed above, and may also contain additional fields which are not synchronized with database 174.

Status indicator field 316 contains a status indicator for a record 300 indicating whether the message defined by the record is considered to have been accessed by processor 108 for generation of the message content on display 120 via execution of messaging application 172. If the status indicator 316 is "read" (or any suitable alternative value, such as the value "1"), the message is considered to have been accessed for generation of the message content on display 120. If the status indicator 316 is "unread" (or any suitable alternative value, such as the value "0"), the message is considered not to have been accessed for generation of the message content on display 120. As will be discussed below in further detail, it is not necessary for the message to have actually been accessed for generation on display 120 in order for the status indicator 316 of that message to be "read".

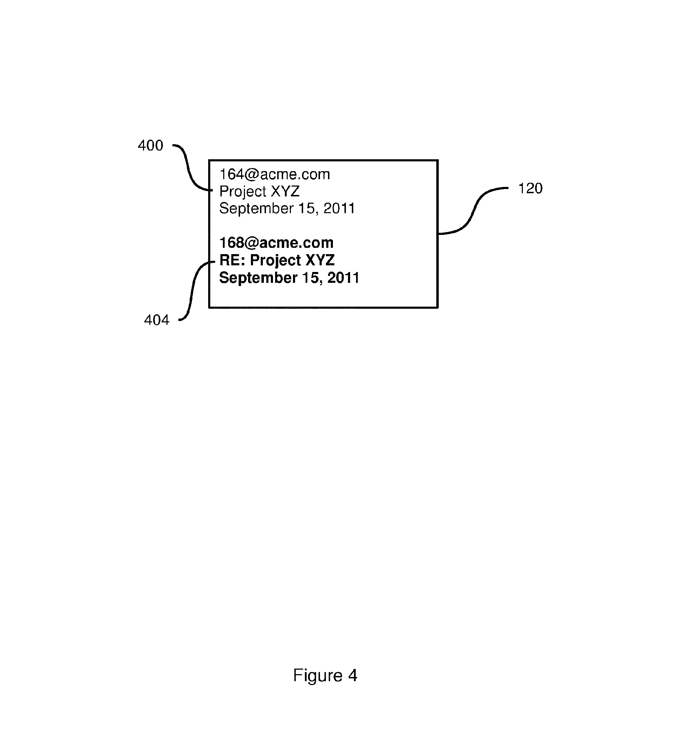

Status indicator 316 affects the execution of messaging application 172 in various ways. Referring briefly to Figure 4, display 120 is shown generating an interface under the control of processor 108, which is executing messaging application 172. The interface generated by display 120 is a list of messages in database 174. In generating the list of messages for display, processor 108 can be configured to determine whether the status indicator 316 of each message is "read" or "unread". For a read message such as the message defined by record 300-1, processor 108 can be configured to control display 120 to generate an interface element 400 corresponding to record 300-1, which includes a representation of the sender, subject and timestamp of the message in regular text. For an unread message such as the message defined by record 300-2, on the other hand, processor 108 can be configured to control display 120 to generate another interface element 404 corresponding to record 300-2, which includes representations of the sender, subject and timestamp in bolded text.

More generally, processor 108 can be configured to generate the message list in such a way that distinguishes between read and unread messages. If input data is received (for example, from keypad 116) indicating a selection of interface element 404, processor 108 can be configured to generate another interface on display 120, including the contents of the message defined by record 300-2. Thereafter, processor 108 can be configured to update the status indicator 316 of record 300-2 to "read".

Processor 108 can also be configured, via execution of messaging application 172, to archive messages in database 174. Archiving a message results in the message no longer being synchronized with database 180. For example, archiving can involve removing the message from database 174 to be stored in a different database, whether in memory 112 or in the memory of a different electronic communication device. Processor 108 can also be configured to automatically archive message records of at least a predetermined age, when the status indicators 316 of those records indicate that they are read. Processor 108 can be configured not to archive records with "unread" status indicators.

Returning to Figure 2, an example performance of method 200 will now be described. The blocks of Figure are performed by processor 148, as configured via the execution of server application 184, in conjunction with the other components of server 144.

Beginning at block 205, server 144 is configured to maintain at least one message record in memory 152. In particular, the at least one message record is stored in database 180. Thus, in the present example performance of method 200, database 180 contains a plurality of message records corresponding to records 300 as shown in Figure 3. It is contemplated that databases 182 and 183 may also each contain at least one message record. Such additional records can contain the same fields as records 300 discussed above.

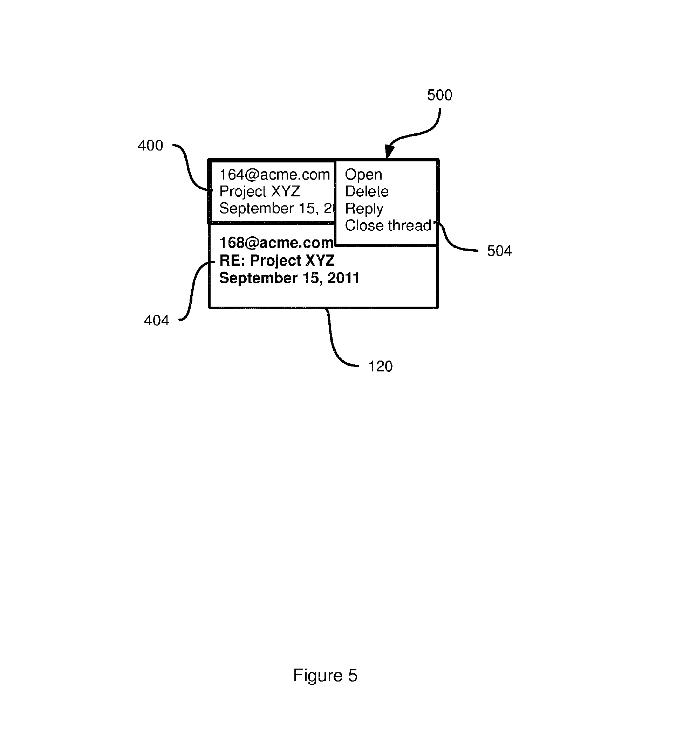

Proceeding to block 205, processor 148 is configured to receive a closing instruction via communications interface 156. The closing instruction is received at communications interface 156 over link 160, and can be originated from any one of electronic communication device 104, handheld 164 and desktop 168. The closing instruction is a message that includes a thread identifier and causes server 144 to "close" the identified thread, as will be discussed in greater detail below. The thread identifier can be, for example, all or a portion of the subject of a message thread. The generation of a closing instruction will now be discussed in connection with Figure 5.

Referring to Figure 5, display 120 of electronic communication device 104 is shown generating an updated interface under the control of processor 108. In particular, interface element 400 (which corresponds to record 300-1) is shown as having been selected by receipt of input from an input device of electronic communication device 104. Responsive to receiving input data representative of a selection of element 400, processor 108 is configured to control display 120 to present a menu 500. Menu 500 includes various selectable menu options for causing processor 108 to open the message defined by record 300-1, to delete the message, and to provide an interface for composing a reply to the message. Menu 500 also includes a thread closing option 504 which is selectable by an input device of electronic communication device 104 for causing processor 108 to generate a closing instruction.

Upon selection of thread closing option 504, processor 108 can be configured to generate a thread closing instruction and transmit the thread closing instruction to server 144. The thread closing instruction can have any suitable format. For example, the thread closing instruction can be an email message addressed to all "members" of the thread (that is, all email addresses which have sent or received messages in the thread) and including one or more supplemental header fields for causing processor 148 to close the thread. When the closing instruction is such an email, the body of the email can include an indication that the thread is to be closed, so as to discourage further emails from being sent in connection with the thread. The closing instruction also includes a thread identifier. The thread identifier can be all or a portion of the subject line of the selected message (that is, the message defined by record 300-1). For example, processor 108 can be configured to identify and remove any leading "RE:" or "FW:" flags from the subject line as contained in subject field 312 of record 300-1 and to use the resulting string as a thread identifier.

Once the closing instruction has been generated by processor 108, processor 108 is configured to control communications interface 132 to transmit the closing instruction to server 144 via link 136.

Returning to Figure 2, at block 210 server 144 receives the closing instruction sent by electronic communication device 104. The performance of method 200 then continues at block 215. At block 215, in response to receiving the closing instruction, processor 148 is configured to locate any messages in memory 152 (that is, in databases 180, 182 and 183) having a thread identifier which matches the thread identifier of the closing instruction. Thus, in the present example performance of method 200, processor 148 is configured to locate any messages in memory 152 with subject lines containing the string "Project XYZ". This includes the messages defined by records in database 180 which correspond to records 300.

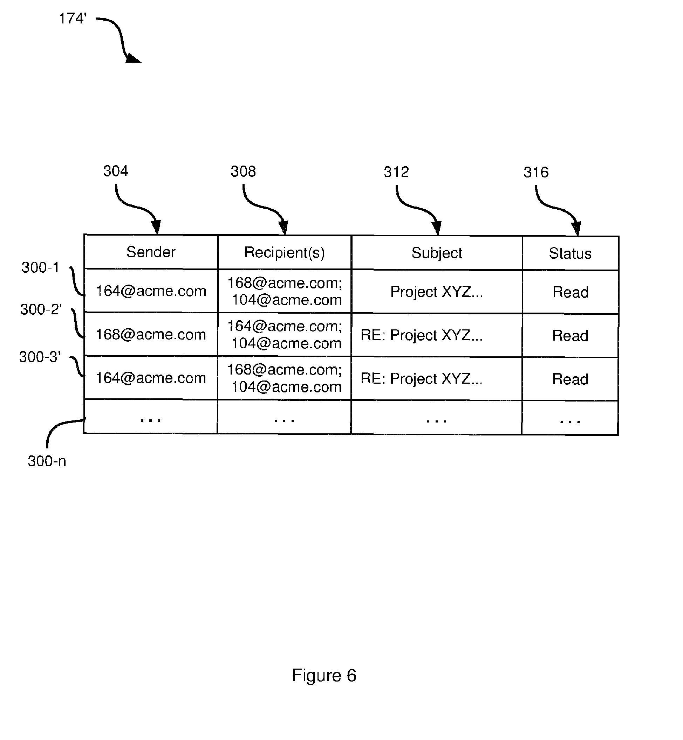

Proceeding to block 220, processor 148 is configured to update the status indicator 316 of each message located at block 215 to "read" (or, as mentioned earlier, any other suitable value which indicates that the message is read, such as the value "1 "). As a result of the synchronization of databases 180, 182 and 183 mentioned above, the performance of block 220 will result in the updating of status indicators 316 at electronic device 104, handheld 164 and desktop 168. For example, turning to Figure 6, an updated version 174' of database 174 is shown, following the performance of block 220 by server 144 and a synchronization operation between server 144 and electronic communication device 104. As seen in Figure 6, status indicator field 316 of records 300-2' and 300-3' has been updated from "unread" to "read". Thus, records 300-2' and 300-3' are considered to have been accessed by processor 108 for generation of message content on display 120, even though such access did not necessarily take place at electronic communication device 104.

It is contemplated that in some examples, when performing blocks 215 and 220, processor 148 can be configured to locate only messages having a thread identifier which matches the thread identifier of the closing instruction and having an "unread" status indicator.

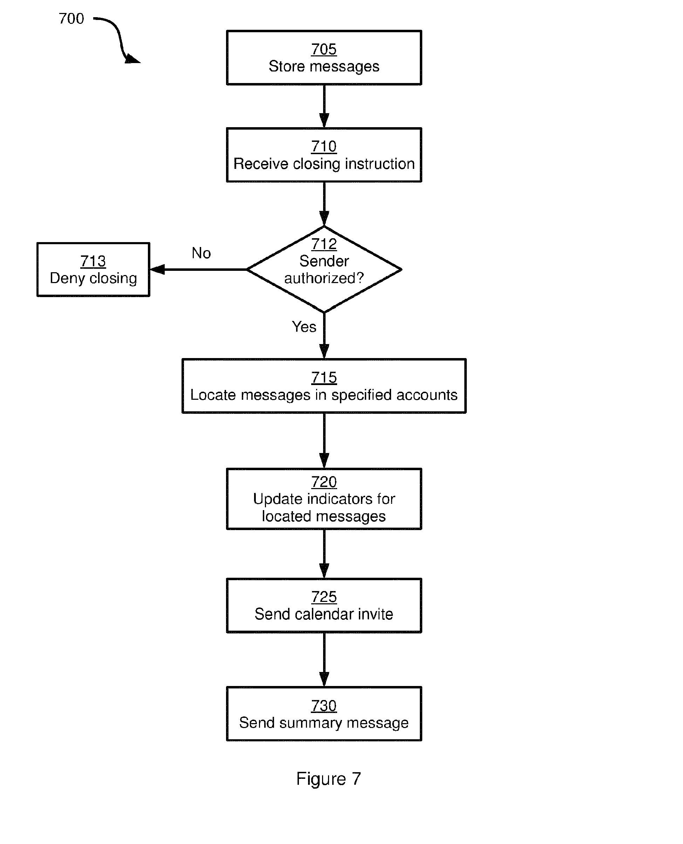

Referring now to Figure 7, a method 700 of processing communications will be discussed. The performance of method 700 will be discussed in conjunction with its example performance on system 100, though it will be understood that method 700 can be also be performed on any other suitable system. Blocks in method 700 having like numbers to blocks in method 200, with the exception of the leading "7", are performed as described above unless specified otherwise. Method 700 is performed at server 144 (e.g. by processor 148 in conjunction with the remaining components of server 144, during the execution of application 184).

Blocks 705 and 710 are performed as described above. At block 712, processor 148 is configured to determine whether the originator of the closing instruction received at block 710 is authorized to close the thread. Thus, in the present example performance of method 700, processor 148 is configured to determine whether electronic communication device 104 is authorized to close the thread "Project XYZ". To perform block 712, server 144 can maintain a list in memory 152 of identifiers of electronic communication devices which are authorized to close threads. The list of authorized devices can be modified at server 144, for example via the terminal mentioned earlier. The performance of block 712 can therefore involve determining whether an originator identifier included in the closing instruction (for example, the address "104@acme.com") is present in the list. In other examples, each one of databases 180, 182 and 183 can be stored along with an authorization level indicating whether closing instructions received from the device associated with each database are to be authorized.

If the determination at block 712 is negative, the performance of method 700 proceeds at block 713, at which server 144 is configured to deny the closing of the thread. Processor 148 is thus configured to discard the closing instruction, and can also be configured to transmit a message to the originator of the closing instruction (electronic communication device 104, in the present example) informing the originator that the thread has not been closed.

If, on the other hand, the determination at block 712 is affirmative, the performance of method 700 proceeds to block 715. It will be assumed, for the present example performance of method 700, that electronic communication device 104 is authorized to close threads. Thus, server 144 is configured to perform block 715 following a "yes" determination at block 712. Blocks 715 and 720 are performed as described above in connection with blocks 215 and 220 respectively, with the exception that at block 715 server 144 is configured to locate only messages with the thread identifier in the closing instruction and account identifiers specified in the closing instruction. The closing instruction can include one or more electronic communication device identifiers, such as email addresses or other account identifiers, as will be described below.

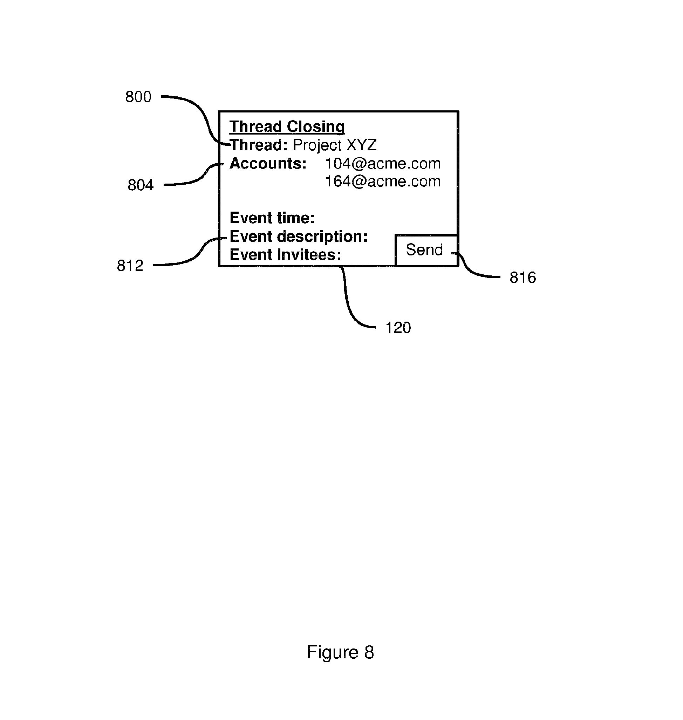

Turning to Figure 8, display 120 of electronic communication device 104 is shown generating an updated interface under the control of processor 108. The updated interface can be generated by display 120 in response to selection of the thread closing element 504 shown in the interface of Figure 5. In other words, processor 108 can be configured to control display 120 for generating the interface shown in Figure 8 instead of immediately sending the thread closing message as described during the performance of method 200.

The interface shown in Figure 8 includes an indication 800 of the thread to be closed. Indication 800 can be populated automatically by processor 108 based on the message which was selected prior to selection of the thread closing element 504. The interface also includes an accounts field 804. Accounts field 804 enables electronic communication device 104 to receive input specifying which accounts are to be affected by the thread closing instruction (that is, which accounts are to have status indicators for unread messages in the thread updated to "read"). Thus, processor 108 is configured to receive input data representing an identifier of at least one device or account associated with a device. In the present example, processor 108 has received input data representative of the account identifiers associated with electronic communication device 104 and handheld 164. The interface also includes calendar event fields 812, which will be discussed below in greater detail. Briefly, when processor 108 receives input data in connection with calendar event fields 812, the closing instruction transmitted from electronic communication device includes an instruction to server 144 to send one or more calendar event invitations.

Returning to Figure 7, the performance of block 715 can therefore include extracting at least one account identifier from the closing instruction, and locating messages in memory 152 associated with the extracted account identifier.

Following the performance of block 720, the performance of method 700 proceeds to block 725, at which processor 148 is configured to transmit one or more calendar invitations based on the closing instruction received at block 710. As seen in Figure 8, processor 108 of electronic communication device 104 (and any other device capable of sending a closing instruction, including handheld 164 and desktop 168) can receive input data in connection with calendar event fields 812. The input data can define a calendar event, and can thus include a time and duration for the event, a description for the event, and the invitees for the event. Invitees can be identified, for example, by account identifiers such as email addresses. The performance of block 725 thus includes determining whether the closing instruction received at block 710 included calendar event data. If the determination is affirmative, processor 148 is configured to generate and transmit one or more calendar invitations (one for each invitee identified in the closing instruction) based on the calendar event data. Processor 148 can also be configured to add a calendar event to relevant ones of databases 180, 182 and 183 (that is, the databases which are associated with the invitees identified in the closing instruction). The calendar event can be a meeting between certain members of the closed thread, a deadline for an action to be taken responsive to the thread, or a combination thereof.

Following the performance of block 725, the performance of method 700 proceeds to block 730, at which processor 148 is configured to generate and transmit one or more summary messages. The generation of a summary message can include determining the number of messages in the thread, for example by traversing databases 180, 182 and 183 to determine a count of unique messages having the thread identifier. Some messages may have been sent to multiple accounts and may therefore appear in multiple databases. Therefore, uniqueness can be determined, for example, by inspecting the content of messages, such that a message with identical content appearing in both databases 180 and 182 is not counted twice. The generation of a summary message by processor 148 can also include the automated generation of a subject including the thread identifier and a message body stating the number of messages in the thread, and stating that the thread has been closed. If calendar event invitations were transmitted at block 725, the summary message body can also include some or all of the calendar event data.

The performance of block 730 also includes generating a list of recipient accounts for the summary message. In the present example, processor 148 is configured to select every address named throughout the thread (that is, all members of the thread) for the list of recipients. In other embodiments, the closing instruction itself can specify recipients for the summary message.

The performance of method 700 concludes with the transmission of the summary message to the identified recipients. It will now be understood that transmitting the summary message can include copying the summary message into one of databases 180, 182 and 183 when the recipient is an account maintained by server 144, such as those associated with electronic communication device 104, handheld 164 and desktop 168.

Those skilled in the art will appreciate that in some embodiments, the functionality of any of applications 172, 176 and 184 mentioned above may be implemented using pre-programmed hardware or firmware elements (e.g., application specific integrated circuits (ASICs), electrically erasable programmable read-only memories (EEPROMs), etc.), or other related components.

It is contemplated that variations can be made to the above-described methods and apparatuses. In some examples, processor 148 of server 144 can be configured to perform part or all of any combination of blocks 712, 715, 725 and 730 substantially automatically, without instruction by the sender of the closing instruction received at block 710. In such examples, server 144 can maintain data defining an organizational hierarchy of the members of a thread in memory 152. Processor 148 can be configured to determine whether the sender of the closing instruction is authorized to close the thread by determining the level in the hierarchy at which the sender is located. As another example, processor 148 can be configured to authorize the closing instruction so long as the sender is no more than a certain number of levels below the level of the highest member of the thread. With respect to the performance of block 715, rather than relying on the contents of the closing instruction, processor 148 can be configured to automatically select the sender of the closing instruction and the thread member having the highest level in the hierarchy for updating status indicators. Processor 148 can also be configured to select invitees for calendar event invitations automatically based on the hierarchy.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A server (144), comprising:
a memory (152);
a communications interface (156); and
a processor (148) interconnected with the memory (152) and the communications interface (156);
the processor configured to store (205) a plurality of messages (180, 182, 183) in the memory (152), each message having one of a plurality of thread identifiers;
the processor further configured to receive (210) a closing message via the communications interface (156), the message including a first thread identifier and a thread closing instruction;
the processor further configured, responsive to receiving the closing message, to locate (215) each of the plurality of messages having thread identifiers which match the first thread identifier; and
the processor further configured to update (220) a status indicator (316) in association with each of the located messages.

2. The server (144) of claim 1, further comprising:
generating, at the processor, a calendar invitation; and
transmitting (725) the calendar invitation via the communications interface (156).

3. The server (144) of claim 2 wherein the closing instruction further comprises calendar event data (812) and wherein the calendar invitation is generated based on the calendar event data.

4. The server (144) of claim 3 wherein the calendar event data comprises an event time, an event description and at least one invitee identifier.

5. The server (144) of any one of claims 1 to 4 wherein storing the plurality of messages comprises storing one of a plurality of account identifiers in association with each of the plurality of messages (180, 182, 183);
wherein the closing instruction includes at least a first account identifier, and wherein the locating (715) of messages comprises locating each of the plurality of messages having thread identifiers which match the first thread identifier and associated with account identifiers which match the first account identifier.

6. The server (144) of any one of claims 1 to 5, further comprising:
responsive to receiving the closing instruction, determining (712) if the closing instruction is authorized prior to locating messages (715).

7. The server (144) of claim 6 wherein the closing instruction includes an originator identifier, and wherein determining (712) if the closing instruction is authorized comprises:
maintaining a list of identifiers of authorized accounts in the memory; and
determining whether the originator identifier is included in the list.

8. A method (200, 700) of processing messages at a server (144), the method comprising:
storing (205) plurality of messages (180, 182, 183) in a memory (152) of the server (144), each message having one of a plurality of thread identifiers;
receiving (210) a closing message via a communications interface (156), the closing message including a first thread identifier and a thread closing instruction;
responsive to receiving the closing message, locating (215) each of the plurality of messages having thread identifiers which match the first thread identifier; and
updating (220) a status indicator in association with each of the located messages.

9. The method (200, 700) of claim 8, further comprising:
generating, at the processor, a calendar invitation; and
transmitting (725) the calendar invitation via the communications interface (156).

10. The method (200, 700) of claim 9 wherein the closing instruction further comprises calendar event data and wherein the calendar invitation is generated based on the calendar event data.

11. The method (200, 700) of claim 10 wherein the calendar event data comprises an event time, an event description and at least one invitee identifier.

12. The method (200, 700) of any one of claims 8 to 11 wherein storing the plurality of messages comprises storing one of a plurality of account identifiers in association with each of the plurality of messages (180, 182, 183);
wherein the closing instruction includes at least a first account identifier, and wherein the locating (715) of messages comprises locating each of the plurality of messages having thread identifiers which match the first thread identifier and associated with account identifiers which match the first account identifier.

13. The method (200, 700) of any one of claims 8 to 12, further comprising:
responsive to receiving the closing instruction, determining (712) if the closing instruction is authorized prior to locating messages.

14. The method (200, 700) of claim 13 wherein the closing instruction includes an originator identifier, and wherein determining (712) if the closing instruction is authorized comprises:
maintaining a list of identifiers of authorized accounts in the memory; and
determining whether the originator identifier is included in the list.

15. A non-transitory computer readable medium (152) for storing a plurality of computer-readable instructions (184) executable by a processor (148) for performing the method (200, 700) of any one of claims 8 to 14.

## Amended claims

### Amended claims in accordance with Rule 137(2) EPC.

**1.** A server (144), comprising:
a memory (152);
a communications interface (156); and
a processor (148) interconnected with the memory (152) and the communications interface (156);
the processor configured to store (205) a plurality of messages (180, 182, 183) in the memory (152), each message having one of a plurality of thread identifiers;
the processor further configured to receive (210) a closing message via the communications interface (156), the closing message including a first thread identifier and a thread closing instruction;
the processor further configured, responsive to receiving the closing message, to locate (215) each of the plurality of messages having thread identifiers which match the first thread identifier; and
the processor further configured to update (220) a status indicator (316) in association with each of the located messages.

**2.** The server (144) of claim 1, further comprising:
generating, at the processor, a calendar invitation; and
transmitting (725) the calendar invitation via the communications interface (156).

**3.** The server (144) of claim 2 wherein the thread closing instruction further comprises calendar event data (812) and wherein the calendar invitation is generated based on the calendar event data.

**4.** The server (144) of claim 3 wherein the calendar event data comprises an event time, an event description and at least one invitee identifier.

**5.** The server (144) of any one of claims 1 to 4 wherein storing the plurality of messages comprises storing one of a plurality of account identifiers in association with each of the plurality of messages (180, 182, 183);
wherein the thread closing instruction includes at least a first account identifier, and wherein the locating (715) of messages comprises locating each of the plurality of messages having thread identifiers which match the first thread identifier and associated with account identifiers which match the first account identifier.

**6.** The server (144) of any one of claims 1 to 5, further comprising:
responsive to receiving the thread closing instruction, determining (712) if the closing instruction is authorized prior to locating messages (715).

**7.** The server (144) of claim 6 wherein the thread closing instruction includes an originator identifier, and wherein determining (712) if the thread closing instruction is authorized comprises:
maintaining a list of identifiers of authorized accounts in the memory; and
determining whether the originator identifier is included in the list.

**8.** A method (200, 700) of processing messages at a server (144), the method comprising:
storing (205) plurality of messages (180, 182, 183) in a memory (152) of the server (144), each message having one of a plurality of thread identifiers;
receiving (210) a closing message via a communications interface (156), the closing message including a first thread identifier and a thread closing instruction;
responsive to receiving the closing message, locating (215) each of the plurality of messages having thread identifiers which match the first thread identifier; and updating (220) a status indicator in association with each of the located messages.

**9.** The method (200, 700) of claim 8, further comprising:
generating, at the processor, a calendar invitation; and
transmitting (725) the calendar invitation via the communications interface (156).

**10.** The method (200, 700) of claim 9 wherein the thread closing instruction further comprises calendar event data and wherein the calendar invitation is generated based on the calendar event data.

**11.** The method (200, 700) of claim 10 wherein the calendar event data comprises an event time, an event description and at least one invitee identifier.

**12.** The method (200, 700) of any one of claims 8 to 11 wherein storing the plurality of messages comprises storing one of a plurality of account identifiers in association with each of the plurality of messages (180, 182, 183);
wherein the thread closing instruction includes at least a first account identifier, and wherein the locating (715) of messages comprises locating each of the plurality of messages having thread identifiers which match the first thread identifier and associated with account identifiers which match the first account identifier.

**13.** The method (200, 700) of any one of claims 8 to 12, further comprising:
responsive to receiving the thread closing instruction, determining (712) if the closing instruction is authorized prior to locating messages.

**14.** The method (200, 700) of claim 13 wherein the thread closing instruction includes an originator identifier, and wherein determining (712) if the closing instruction is authorized comprises:
maintaining a list of identifiers of authorized accounts in the memory; and determining whether the originator identifier is included in the list.

**15.** A non-transitory computer readable medium (152) for storing a plurality of computer-readable instructions (184) executable by a processor (148) for performing the method (200, 700) of any one of claims 8 to 14.
